# FASCICULE DE BREVET EUROPEEN

(11) **EP 1 641 875 B1**
(45) Date de publication et mention de la délivrance du brevet: **02.02.2011**
(21) Numéro de dépôt: 04767550.9
(22) Date de dépôt: 01.07.2004
(51) Int. Cl.: C08L 3/08, D21H 17/29, D21H 19/54, D21H 27/00

(54) **COMPOSITION AMYLACEE CATIONIQUE LIQUIDE ET SES UTILISATIONS**
KATIONISCHE FLÜSSIGE STÄRKEHALTIGE ZUSAMMENSETZUNG UND VERWENDUNGEN DAVON
CATIONIC LIQUID STARCHY COMPOSITION AND USES THEREOF

(30) Priorité: 08.07.2003 FR 0308327
(43) Date de publication de la demande: 05.04.2006
(73) Titulaire: Roquette Frères, 62136 Lestrem (FR)
(72) Inventeur: HOUZE, Régis, F-59551 Tourmignies (FR); LADRET, Marika, F-59840 Lompret (FR)
(74) Mandataire: Boulinguiez, Didier
(86) Numéro de dépôt international: PCT/FR2004/001708
(87) Numéro de publication internationale: WO 2005/014709

(56) Documents cités:
- WO-A-01/96403
- WO-A-95/18157
- BE-A- 626 712
- FR-A- 2 434 821
- SUZUKI OSAMU ET AL: "Cationic starch of low molecular weight and low viscosity" WPI WORLD PATENT INFORMATION DERWENT, DERWENT, GB, vol. 1974, no. 25 PA - HOHNEN OIL KK PN - JP48069885 A, 1974, XP002161931
- DATABASE WPI Section Ch, Week 199914 Derwent Publications Ltd., London, GB; Class A11, AN 1999-156595 XP002273178 & JP 11 012979 A (SEIKO KAGAKU KOGYO KK) 19 janvier 1999 (1999-01-19) & PATENT ABSTRACTS OF JAPAN vol. 1999, no. 04, 30 avril 1999 (1999-04-30) & JP 11 012979 A (SEIKO KAGAKU KOGYO CO LTD), 19 janvier 1999 (1999-01-19)

## Description

La présente invention a pour objet une nouvelle composition amylacée cationique liquide présentant des caractéristiques sélectionnées de matière sèche, de viscosité, de taux d'azote total et de pH.

Elle concerne également l'utilisation de ladite composition amylacée cationique liquide dans les domaines industriels, notamment de la papeterie, de la cartonnerie et du traitement des eaux industrielles.

Elle vise enfin tout particulièrement son utilisation dans le domaine des compositions d'agent de collage utilisées pour le traitement interne ou externe du papier et du carton.

Dans les secteurs industriels, en particulier dans les domaines de la papeterie, de la cartonnerie et du traitement des eaux industrielles, issues ou non de papeterie ou cartonnerie, il est fait appel couramment à des compositions amylacées cationiques comme additifs en tant que tels ou comme moyens destinés à la préparation d'additifs.

Un tel usage est décrit, par exemple, dans le brevet WO 01/96403 au nom de la Demanderesse.

D'autres domaines d'application de telles compositions concernent la chimie en général, les colles et adhésifs en général, le textile, les liants hydrauliques, les agglomérés combustibles ou non, le traitement des métaux, les compositions lessivielles, la photographie, le forage, les produits phytosanitaires, les produits cosmétologiques, etc...

Quels que soient les usages auxquels sont destinées les compositions amylacées cationiques, celles-ci sont généralement fournies sous forme de poudres par les amidonniers aux industriels de la fabrication des produits finis ou semi-finis.

Au moment voulu, i.e juste avant leur mise en oeuvre applicative, lesdits industriels font subir un traitement approprié aux dites poudres.

Ce traitement, effectué donc sur place et juste avant usage, consiste classiquement en la préparation d'une suspension ou « lait » de matière amylacée cationique présentant une matière sèche (« MS ») au plus égale à 10 %, en la solubilisation, généralement en continu, de ladite matière amylacée cationique sur un appareil de cuisson et en la dilution, également en continu, de la colle chaude ainsi obtenue.

La colle diluée ainsi préparée sur le lieu même de sa mise en oeuvre applicative, présente classiquement une MS comprise entre 0,5 et 9 %, le plus souvent entre 1 et 7 %.

Dans certains cas cependant, les industriels souhaitent pouvoir disposer directement de compositions amylacées liquides utilisables en l'état ou en tout cas après une simple opération de dilution dans l'eau.

Cette forme de présentation permet de s'affranchir de la nécessité de solubiliser la matière amylacée cationique sur place et donc de mettre en oeuvre, sur place, des moyens matériels (cuiseur en continu ou « jet-cooker » notamment) et humains nécessaires à cette solubilisation.

Elle peut permettre également un dosage plus précis et/ou un mélange facilité de la matière amylacée cationique au moment de sa mise en oeuvre applicative, par exemple comme additif destiné à réduire les substances gênantes contenues dans les circuits d'eau ou comme additif destiné à la préparation de compositions à base d'agents de collage.

En tout état de cause, cette forme de présentation liquide permet à l'industriel de disposer d'une composition constante dans ses caractéristiques, notamment de concentration et de température.

Cependant, pour être économiquement satisfaisantes, de telles compositions amylacées cationiques liquides doivent être commercialisées avec une MS suffisamment élevée pour éviter de devoir transporter et stocker d'importants volumes d'eau.

Une MS d'au moins 10 % est alors requise, permettant en outre de répondre à l'ensemble des souhaits des utilisateurs et notamment de ne nécessiter sur place aucune opération coûteuse de reconcentration des compositions amylacées cationiques liquides mises dans le commerce.

En outre, la mise à disposition de compositions amylacées cationiques liquides, utilisables en l'état ou par simple dilution dans l'eau, impose que ces compositions présentent :
- une bonne stabilité au stockage tant chez le fabricant que chez l'utilisateur,
- une viscosité adaptée aux opérations de transport, pompage et dilution,
- des caractéristiques physico-chimiques (y compris de viscosité) adaptées au maximum d'usages potentiels.

Compte-tenu de ces contraintes, il n'existe à la connaissance de la Demanderesse, que très peu de compositions amylacées cationiques liquides ayant connu un réel développement commercial.

Une technologie préconisée par RAISIO Chemicals Ltd (« RAISIO ») et décrite notamment dans ses brevets WO 93/10305, WO 95/18157, WO 98/24972 et WO 99/18288, consiste globalement en la préparation et l'application de colles de fécule de pomme de terre hautement cationiques obtenues à partir de milieux réactionnels à hautes matières sèches (MS > 50 %), dont la moitié environ est apportée par le seul réactif de cationisation. Cette préparation implique une étape préalable d'oxydation de la matière amylacée par du peroxyde d'hydrogène.

Le taux d'azote des compositions dont l'usage est préférentiellement recommandé est globalement supérieur à 2 % et se situe le plus souvent entre 2,5 et 5 %.

Cependant, de telles colles présentent un certain nombre d'inconvénients.

En premier lieu, et comme le confirment des analyses faites par la Demanderesse sur des produits commercialisés sous la dénomination « RAIFIX », ces colles hautement cationiques présentent un taux de fixation de l'azote relativement bas, généralement inférieur à 65 %. Il en résulte notamment une quantité résiduelle élevée de réactif cationique et/ou de ses produits d'hydrolyse au sein même de telles compositions, ce qui nuit à leur efficacité réelle en tant qu'agents d'élimination des substances gênantes, présentes dans les circuits papetiers ou comme additifs dans la préparation de compositions d'agents de collage.

Par ailleurs, cette fixation très partielle du réactif cationique azoté rend difficilement envisageable l'utilisation de ces colles comme additifs de traitement des eaux industrielles, en particulier des eaux destinées à l'alimentation humaine ou animale.

En outre, le pH élevé de ces colles, généralement supérieur à 9, peut poser des problèmes de sécurité et de corrosion inhérentes à la préparation, à la manipulation et à l'utilisation de produits alcalins.

De plus, le pH élevé de ces colles est néfaste à leur usage dans la préparation des compositions à base d'agents de collage tels que, par exemple, les anhydrides d'acides alcényl succiniques (« ASA ») car favorisant l'hydrolyse et donc la perte d'efficacité desdits agents de collage. Ce phénomène d'hydrolyse peut générer par ailleurs des problèmes de mousse ou d'encrassement au niveau des dispositifs industriels (émulsionneur, machine à papier, etc...) et des conduites en aval ou en amont de ces dispositifs..

Enfin, du fait de leur viscosité relativement élevée, ces colles hautement cationiques sont généralement mal adaptées aux opérations de dilution puis d'introduction dans un milieux aqueux, notamment quand ces opérations se font à température ambiante ou à température relativement peu élevée (< 50°C).

Il existe également sur le marché, des compositions amylacées cationiques commercialisées par RAISIO sous la dénomination « RAIBOND 15 » et qui sont moins hautement cationiques que les compositions « RAIFIX » précitées.

Elles présentent cependant un taux d'azote encore élevé, à savoir le plus souvent d'au moins 1,6 % environ. Leur pH reste également élevé, à savoir supérieur à 9.

A la connaissance de la Demanderesse, d'autres compositions amylacées cationiques liquides sont ou ont été proposées aux industriels et qui, à l'inverse, présentent un taux d'azote relativement bas, à savoir inférieur à 0,5 %.

C'est notamment le cas de la composition « REDISIZE 132 » commercialisée par National Starch and Chemical Company (« NATIONAL ») correspondant à une solution à 8 % d'amidon de maïs waxy cationique utilisable pour la préparation de compositions d'agent de collage comme décrit dans le brevet US 6,296,696.

Il convient de rappeler que dans le domaine des matières amylacées cationiques- effectivement commercialisées (généralement sous forme de poudres) en vue de leur usage dans la -préparation de compositions d'agents de collage, notamment de type « ASA » ou « AKD » (alkyl cétène dimère), il est classiquement fait appel à des amidons cationiques présentant des taux d'azote relativement peu élevés (< 0,5 %).

Ces produits faiblement cationiques sont généralement issus de bases riches en amylopectine (amidons « waxy »). En effet, la mise en oeuvre de telles bases amylacées, décrite par exemple dans les brevets EP 353 212 et plus récemment US 6,001,166, permet de conférer une stabilité en solution suffisante aux produits faiblement cationiques résultants. En outre, la structure « branchée » ou « ramifiée » de ces produits améliorerait la stabilité et l'efficacité des agents de collage (EP 353 212) et c'est pourquoi il a été récemment proposé, dans le brevet WO 00/49226, de mettre à disposition des produits cationiques de toutes bases (y compris de bases waxy) dont la structure « branchée » ou « ramifiée » est augmentée par réticulation chimique.

Cependant, de tels produits sont extrêmement visqueux et leur mise en oeuvre ne peut être envisagée efficacement que dans des milieux dont la température est très élevée. Une température élevée augmente cependant les risques d'hydrolyse d'agents de collage.

Il a été préconisé par la Demanderesse, dans son brevet WO 01/96403 précité, l'usage en toutes généralités et notamment dans la préparation de composition d'agents de collage, de compositions amylacées cationiques, solides ou liquides, présentant un taux d'azote limité (au plus égal à 2 %) et une viscosité très faible, à savoir inférieure à 1600 mPa.s pour une MS ajustée à 20 %.

Cette viscosité, mesurée donc à 20 % de MS, se situe très préférentiellement entre 50 et 700 mPa.s.

Comme l'a vérifié la Demanderesse, en particulier pour les compositions amylacées utilisées dans les exemples dudit brevet, cette viscosité, si elle avait été mesurée pour une MS ajustée à 10 % (au lieu de 20%), aurait été (très) inférieure à 200 mPa.s.

C'est notamment le cas de la « COMPOSITION 2 » envisagée dans la préparation d'une émulsion d'ASA selon l'EXEMPLE 6 dudit brevet et qui, déjà à une MS ajustée à 20 %, présente une viscosité (100 mPa.s) largement inférieure à 200 mPa.s.

Les compositions amylacées cationiques liquides décrites dans ce brevet permettent généralement de répondre aux exigences technico-économiques de la pratique industrielle actuelle, mentionnées précédemment.

La Société Demanderesse a désormais trouvé qu'il était possible de mettre à la disposition des industriels des compositions cationiques liquides encore améliorées, sélectionnées selon les quatre critères de matière sèche (MS), de viscosité, de taux d'azote total et de pH, lesdites compositions étant en particulier avantageusement adaptées à la préparation de compositions d'agents de collage.

La présente invention a ainsi pour objet une nouvelle composition amylacée cationique liquide, **caractérisée en ce qu**'elle présente :
- une matière sèche (MS) au moins égale à 10 %, de préférence comprise entre 10 et 50 %,
- une viscosité, déterminée selon un test T, au moins égale à 275 mPas.s et au plus égale à 1000 mPa.s,
- un taux d'azote total au moins égal à 0,6 % et au plus égal à 1,4 %, ces pourcentages étant exprimés en poids sec par rapport au poids sec de composition,
- un pH inférieur à 9, de préférence compris entre 3,5 et 8,5.

Le test T, utilisé pour mesurer la viscosité de la composition liquide selon l'invention, consiste en premier lieu à déterminer, par toute méthode classique à la portée de l'homme de l'art, la matière sèche de ladite composition, cette dernière étant au moins égale à 10 % conformément à l'invention.

Si cette matière sèche est supérieure à 10 %, on l'ajuste à 10 % par simple dilution dans de l'eau distillée. Si cette matière sèche est de 10 %, on n'effectue aucune dilution. En suite de quoi, on mesure de manière connue en soi, la viscosité Brookfield à 25°C et à 20 tours/minute de la composition en question, celle-ci présentant donc une MS de 10 % (après ou non dilution).

Selon une variante avantageuse, la viscosité de la composition amylacée cationique liquide selon l'invention, mesurée selon le test T, est au moins égale à 275 mPa.s et au plus égale à 950 mPa.s, de préférence au moins égale à 275 mPa.s et au plus égale à 930 mPa.s.
Cette viscosité peut notamment être comprise entre 300 et 900 mPa.s

La matière sèche de la composition amylacée cationique liquide conforme à l'invention peut, notamment comme indiqué, atteindre une valeur de 50 %. Cependant, de manière préférentielle, cette matière sèche est comprise entre 10 et 35 %.

Cette matière sèche peut être constituée (quasi) exclusivement d'une matière amylacée cationique telle - -que décrite ci-après, y compris des sels, du réactif cationique et/ou de ses produits d'hydrolyse, et/ou autres composés résultant de la cationisation et qui sont éventuellement encore présents au sein de ladite matière amylacée cationique.

Cependant, cette matière sèche peut, à côté de ladite matière amylacée cationique, contenir des composés ne résultant pas de l'étape de cationisation et qui ont été mis en oeuvre avant et/ou après ladite étape.

Ces composés peuvent notamment être choisis dans le groupe comprenant les agents de conservation, par exemple les agents biocides et bactéricides, les agents de rhéologie, par exemple les polyols et les sels d'acides hydroxycarboxyliques comme les lactates ou gluconates, les pigments et charges, les sels d'aluminium, les agents anti-tartre, etc...

La Demanderesse a notamment trouvé qu'il pouvait être d'intérêt d'associer au sein d'une composition amylacée cationique liquide conforme à l'invention, au moins une matière cationique et au moins un polyol, ledit polyol permettant, entre autres, d'adapter la viscosité de ladite composition et notamment d'abaisser la viscosité de ladite composition aux fins, si nécessaire, de l'adapter à un usage particulier ou, si nécessaire, de lui permettre d'atteindre une valeur conforme à la présente invention.

Ledit polyol peut consister en un produit de nature non saccharidique comme le glycérol, le polyéthylène glycol...

De manière très avantageuse, ledit polyol est de nature saccharidique et est notamment choisi dans le groupe comprenant les monosaccharides hydrogénés, les disaccharides hydrogénés, les trisaccharides hydrogénés, les oligo- et polysaccharides hydrogénés et les mélanges quelconques d'au moins deux quelconques de ces produits.

Il peut s'agir notamment de sorbitol, d'isosorbide, de mannitol, de xylitol, d'érythritol, de maltitol, de lactitol ou d'un hydrolysat d'amidon hydrogéné.

Selon une autre variante avantageuse, le taux d'azote total de la composition liquide selon l'invention est au moins égal à 0,7 % et au plus égal à 1,3 % (sec/sec).

Par ailleurs, le pH de ladite composition se situe préférentiellement à une valeur significativement inférieure à 9, en particulier entre 3,5 et 7,5 et plus particulièrement entre 4 et 7.

La composition liquide selon l'invention, commercialisable, stockable et, éventuellement utilisable, « en l'état », présente généralement une température inférieure à 60°C, de préférence au plus égale à 50°C et notamment comprise entre 10 et 40°C.

Ces températures se distinguent catégoriquement des températures des colles effectuées, classiquement à partir de poudres et à très faibles MS, sur place chez l'industriel (papetier par exemple), températures qui sont classiquement beaucoup plus élevées.

La matière amylacée contenue dans la composition liquide selon l'invention n'est pas limitée aux amidons waxy tels que communément préconisés ou exploités industriellement dans l'art antérieur. Elle peut être issue de l'ensemble des amidons, d'origine naturelle ou hybride, y compris ceux provenant de mutations ou de manipulations génétiques. Lesdits amidons peuvent notamment être issus de pomme de terre, de pomme de terre waxy, de maïs, de mais waxy, de blé, de blé waxy, de mais à haute teneur en amylose, de riz, de pois, de pois à haute teneur en amylose, d'orge ou de manioc, des coupes ou fractions qui peuvent être faites ou obtenues telles que l'amylose, l'amylopectine, les coupes granulométriques connues de l'homme de l'art sous les vocables d'amidon de blé « A » et amidon de blé « B », et les mélanges quelconques d'au moins deux quelconques des produits susmentionnés, par exemple un mélange d'au moins un amidon de tubercule (fécule de pomme de terre notamment) et d'au moins un amidon de céréale (amidon de blé « A », blé « B », maïs, mais waxy notamment) ou de deux amidons de céréale.

Les matières amylacées cationiques contenues dans les compositions selon l'invention peuvent par ailleurs consister en des-- produits amphotères, i.e en des produits qui sont à la fois cationiques et anioniques. Les substituants anioniques peuvent, à titre d'exemples, être choisis dans le groupe comprenant les groupements phosphates, phosphonates, sulfates, sulfoalkyles, carboxyles, carboxyalkyles et sulfocarboxyles.

Il peut s'agir avantageusement de groupements phosphatés, succinylés, sulfosuccinylés, hydroxyalkylés et acétylés.

La viscosité des compositions selon l'invention peut être obtenue également par de multiples moyens, notamment chimiques, enzymatiques et/ou physiques, appliqués de manière continue ou discontinue, en une ou plusieurs étapes, avant, pendant et/ou après l'étape de cationisation. Ces moyens incluent ceux décrits dans l'un quelconque des brevets précités dès lors qu'ils permettent d'atteindre, directement ou indirectement, la viscosité précisément sélectionnée selon l'invention, à savoir au moins égale à 275 mPa.s et au plus égale à 1000 mPa.s selon le test T.

On dispose dès lors de nouveaux produits industriels qui présentent :
- non seulement a) une bonne stabilité au stockage et b) une viscosité adaptée aux opérations de transport, pompage et dilution,
- mais encore des possibilités améliorées d'utilisation en regard des compositions cationiques liquides de l'art antérieur .

Cette utilisation peut être envisagée dans l'ensemble des domaines d'application mentionnés en introduction (chimie, colles et adhésifs, textile, papeterie, cartonnerie, traitement des eaux, etc...). Selon le cas, la composition amylacée cationique liquide selon l'invention peut être utilisée « en l'état » ou être préalablement diluée et ce, de telle sorte que sa matière sèche soit abaissée à une valeur comprise entre 0,5 et 9 %, de préférence entre 1 et 7%.

La composition amylacée cationique selon l'invention est cependant en premier lieu utilisable, en l'état ou après dilution, comme additif choisi dans le groupe comprenant les additifs pour papeterie et cartonnerie et les additifs de traitement des eaux industrielles, issues ou non de papeterie ou cartonnerie, ou est destinée à la préparation d'un tel additif.

De manière particulièrement avantageuse, la composition amylacée cationique liquide selon l'invention est utilisable comme additif choisi dans le groupe comprenant les additifs de papeterie de--masse, les additifs destinés à réduire les substances gênantes contenues dans les circuits d'eau et/ou retenues sur les équipements de procédés, papetiers ou non, les additifs destinés à la préparation de compositions d'agents de collage utilisées pour le traitement interne ou externe du papier ou du carton, les additifs destinés à la préparation de compositions de crêpage, de surfaçage ou de couchage du papier ou du carton, les additifs destinés à la préparation de compositions contenant des azurants optiques, des charges, des pigments, des sels d'aluminium, de la silice colloïdale, des colorants et/ou des polymères synthétiques.

La Société Demanderesse a trouvé notamment que la composition selon l'invention était particulièrement bien adaptée à la préparation de compositions d'agents de collage, y compris d'agents de collage décrits dans l'un quelconque des brevets mentionnés précédemment.

L'agent de collage peut contenir un produit choisi dans le groupe comprenant les acides alkényl succiniques et dérivés, en particulier leurs sels et anhydrides, les alkylcétène dimères et dérivés, la colophane et dérivés, les acétals d'aldéhyde alkylés, les isocyanates alkylés, les (co)polymères synthétiques et les mélanges quelconques d'au moins deux quelconques desdits produits.

Il peut s'agir en particulier d'un agent de collage contenant un anhydride d'acide alkényl succinique (« ASA ») comme il sera exemplifié par ailleurs.

Il a été constaté que les caractéristiques physico-chimiques de la composition amylacée sélectionnée selon l'invention, en particulier les caractéristiques de pH, de viscosité et de taux d'azote total permettaient d'atteindre d'excellents résultats en termes de protection et donc d'efficacité des agents de collage, notamment de type ASA.

Il a notamment été observé que ces résultats étaient améliorés en regard de ceux obtenus avec des produits moins visqueux tels que ceux décrits dans le brevet WO 01/96403 précité ou des produits présentant des valeurs de pH et d'azote total plus élevées.

En outre, la Demanderesse a découvert que la composition amylacée cationique liquide conforme à l'invention, éventuellement diluée, était particulièrement efficace quand elle était mise en contact ou était destinée à être mise en contact (directement ou indirectement, par exemple via une composition d'agent de collage) avec une composition fibreuse (par exemple une pâte papetière) présentant une teneur élevée en ions calcium, à savoir une teneur au moins égale à 200 mg/l, notamment comprise entre 250 mg/l et 1000 mg/l. Cette teneur peut en particulier être comprise entre 400 et 800 mg/l.

Il a également été trouvé, comme il sera décrit par ailleurs, que la composition selon l'invention était particulièrement bien adaptée comme additif en vue de la fabrication :
- de papier « tissue »,
- de papier ou carton, surfacé ou couché, et/ou,
- de papier pour ondulé, par exemple de papier cannelure destiné à la préparation de carton ondulé.

La composition selon l'invention peut également être très avantageusement utilisée comme additif destiné à réduire les substances gênantes contenues dans les circuits d'eau papetiers.

Il a par ailleurs été observé que la composition selon l'invention peut être utilisée pour le traitement, en particulier le collage, l'encollage, l'apprêtage ou l'amidonnage, de divers matériaux textile (fibres, fils, nappes, tissus) du fait de sa grande affinité pour de tels matériaux, par exemple ceux à base de coton ou de polyester/coton.

Elle leur confère notamment une bonne résistance à l'abrasion.

La présente invention va être décrite de façon encore plus détaillée à l'aide des exemples qui suivent et qui ne sont aucunement limitatifs.

### EXEMPLE 1

Une poudre de fécule de pomme de terre présentant un taux d'azote total de 1,2 % (sec/sec) et obtenue en phase sèche conformément au brevet FR 2.434.821 au nom de la Demanderesse, est délayée et mise en suspension dans de l'eau déminéralisée froide de telle sorte à obtenir un lait d'amidon cationique à 11,5 % de matière sèche (« MS »).

Différents échantillons dudit lait sont traités, en cuve ouverte, avec des taux variables d'α-amylase et/ou des conditions opératoires différentes (durée, température de conversion notamment), l'objectif étant de pouvoir obtenir une composition amylacée cationique présentant une viscosité Brookfield (mesurée à 25°C et à 20 tours/minute) d'environ 250 à 300 mPa.s et une MS de 10 % ou très légèrement supérieure.

On a obtenu ainsi une composition amylacée cationique liquide (ci-après « COMPOSITION A ») présentant une matière sèche (MS) de 10, 2 %, une viscosité Brookfield (25°C - 20 tours/minute) de 330 mPa.s (soit de 290 mPa.s selon le test T après ajustement de la MS à 10 %), un taux d'azote total de 1,2 % et un pH de 5,3.

La COMPOSITION A présente une très bonne stabilité au stockage, aucun phénomène d'augmentation de viscosité ou de rétrogradation n'étant observé après 1 mois de stockage à 25°C.

### EXEMPLE 2

Une poudre de fécule de pomme de terre présentant un taux d'azote total de 0,8 % (sec/sec) et obtenue en phase sèche conformément au brevet FR 2.434.821 au nom de la Demanderesse, est délayée et mise en suspension dans de l'eau déminéralisée froide de telle sorte à obtenir un lait- d'amidon cationique à 22 % de matière sèche (« MS »).

Différents échantillons dudit lait sont traités, en cuve ouverte, avec des taux variables d'α-amylase et/ou des conditions opératoires différentes (durée, température de conversion notamment), l'objectif étant de pouvoir obtenir une composition amylacée cationique présentant une viscosité Brookfield (mesurée à 25°C et à 20 tours/minute) d'environ 2500 à 3000 mPa.s et une MS proche de 20 %.

On a obtenu ainsi une composition amylacée cationique liquide (ci-après « COMPOSITION B») présentant une matière sèche (MS) de 19,7 %, une viscosité Brookfield (25°C - 20 tours/minute) de 2580 mPa.s (soit de 350 mPa.s selon le test T après ajustement de la MS à 10 %), un taux d'azote total de 0,8 % et un pH de 5,1.

La COMPOSITION B présente une très bonne stabilité au stockage, aucun phénomène d'augmentation de viscosité ou de rétrogradation n'étant observé après 1 mois de stockage à 25°C.

On a par ailleurs obtenu les compositions amylacées cationiques liquides stables ci-dessous :
- COMPOSITION C : colle de fécule de pomme de terre cationique à 10,6 % de MS, présentant un taux d'azote total de 1,2 % et une viscosité de 580 mPa.s selon le test T et un pH de 4,9,
- COMPOSITION D : colle de fécule de pomme de terre cationique à 10,2 % de MS, présentant un taux d'azote total de 0,8 %, une viscosité de 910 mPa.s selon le test T et un pH de 5,0,
- COMPOSITION E : colle d'amidon de mais waxy cationique à 27 % de MS, présentant un taux d'azote total de 0,65 % et une viscosité de 330 mPa.s selon le test T et un pH de 5,2.

### EXEMPLE 3

On évalue les performances des COMPOSITIONS A et B conformes à l'invention décrites ci-avant dans le cadre de la préparation d'une composition d'agent de collage et ce, en comparaison avec respectivement :
- une composition amylacée cationique liquide témoin (ci-après « COMPOSITION T1 ») identique à la composition utilisée dans l'EXEMPLE 6 du brevet WO 01/96403 et présentant donc une faible viscosité (100 mPa.s à une MS ajustée de 20 %), un taux d'azote total de 1,5 % (sec/sec) et un pH de 5,8.
- une composition amylacée cationique liquide témoin du commerce (ci-après « COMPOSITION T2 ») présentant une matière sèche d'environ 19 %, un taux d'azote total de 1,75 % (sec/sec), une viscosité BROOKFIELD (25°C - 20 t/min) de 650 mPa.s (soit de 120 mPa.s après ajustement de sa MS à 10 % selon le test T) et un pH de 11.

Les COMPOSITIONS A, B, T1 et T2 présentent une température de 25°C environ. Chacune est tout d'abord diluée avec de l'eau de forage dont la température est de 25°C environ de sorte que la MS de chacune des ces COMPOSITIONS est abaissée à 4 %.
A 100 g de chacune de ces COMPOSITIONS ainsi diluées à 4 % de MS et dont la température est donc d'environ 25°C, on ajoute 3,33 g de l'agent de collage « FIBRAN 76 » à base d' ASA.

Les compositions de collage ainsi obtenues à partir, respectivement, des COMPOSITIONS A, B, T1 et T2 diluées et de « FIBRAN 76 » (ci-après désignées respectivement « ADDITIF A », « ADDITIF B », « ADDITIF T1 » et « ADDITIF T2 ») présentent donc un ratio pondéral matière amylacée (en sec) / agent de collage de 1,2/1 environ.

Chacun des ADDITIFS A, B, T1 et T2 est ensuite soumis, à température ambiante, à un traitement important de cisaillement, à savoir une homogénéisation de 5 minutes à 20.000 tours/minute.

On évalue ensuite, dès après ledit traitement (« T0 ») et 24 heures après ledit traitement (« T24 ») la granulométrie moyenne des émulsions d'agent de collage ainsi obtenues à partir de chacun des ADDITIFS A, B, T1 et T2.

La mesure de la granulométrie moyenne est effectuée sur un appareil « BECKMAN COULTER LS PARTICLE SIZE ANALYZER » en tenant compte du volume des particules. Elle est exprimée en µm.

On obtient, à T0 et T24, les valeurs de granulométrie « moyenne » ci-après :

| | T0 | T24 |
|---|---|---|
| ADDITIF A | 1,8 | 8,2 |
| ADDITIF B | 1,5 | 7,5 |
| ADDITIF T1 | 1,7 | 11,4 |
| ADDITIF T2 | 9,2 | 58,2 |

On observe que dans les conditions du présent essai, lesquelles n'ont pas été optimisées, les ADDITIFS A et B, obtenus à partir des COMPOSITIONS A et B conforme à l'invention, présentent :
- une stabilité encore améliorée en regard de l'ADDITIF T1 obtenu à partir de la COMPOSITION T1,
- une finesse et une stabilité très significativement supérieures à l'ADDITIF T2 obtenu à partir de la COMPOSITION T2.

La Demanderesse pense que la viscosité plus élevée des COMPOSITIONS A et B conformes à l'invention en regard de celle des COMPOSITIONS T1 et T2 pourrait expliquer, en tout ou partie, leur plus grand pouvoir protecteur de l'agent de collage.

Le pH très élevé de la COMPOSITION T2 pourrait par ailleurs expliquer ses mauvaises performances, ledit pH favorisant l'hydrolyse de l'agent de collage. Cette hydrolyse se manifeste d'ailleurs par l'apparition d'une mousse brunâtre au sein de l'émulsion préparée à partir de l'ADDITIF T2.

Par ailleurs, la valeur élevée de la granulométrie moyenne de ladite émulsion ajoutée à l'observation faite selon laquelle ladite émulsion présente plusieurs populations de particules, dissent à penser que la COMPOSITION T2 était intrinsèquement de faible stabilité.

La Demanderesse a par ailleurs observé qu'au stade industriel, il était effectivement avantageux, d'un point de vue tant technique qu'économique, de faire appel aux compositions amylacées cationiques liquides selon l'invention, notamment en regard de compositions amylacées cationiques présentant un taux d'azote total plus faible.

Il a été en outre constaté que ces avantages étaient particulièrement mis en exergue lorsque les compositions selon l'invention étaient destinées à être mises en contact, en l'état ou après dilution, soit directement (par exemple comme additifs de papeterie de masse), soit indirectement (par exemple comme additifs pour la préparation d'une composition d'agent de collage), avec des compositions fibreuses (pâtes à papier notamment) présentant des teneurs élevées en ions calcium.

Ces avantages peuvent notamment se concrétiser par :
- une amélioration de certaines caractéristiques physiques de papiers de toutes natures et destinations (papiers pour impression/écriture, papiers pour ondulé, papiers « tissue », etc...) et/ou,
- une amélioration des caractéristiques et des performances de compositions d'agents de collage de toutes natures (ASA, AKD, autres) et destinations (collage interne et/ou externe du papier ou carton).

Il a notamment été constaté que des compositions amylacées cationiques liquides telles que les COMPOSITIONS A à E décrites ci-avant permettaient, en regard de compositions amylacées cationiques de taux d'azote total plus faibles et solubilisées sur place sur un dispositif de cuisson continue, de diminuer très significativement la quantité d'agent de collage mise en oeuvre et ce, sans en diminuer l'efficacité et tout en préservant les caractéristiques physiques générales du papier, voire en améliorant certaines d'entre elles.

Il a par ailleurs été constaté que les compositions conformes à l'invention telles que les COMPOSITIONS B et E décrites ci-avant permettaient, dans le cadre de la fabrication de papier « tissure » :
- non seulement d'améliorer en toutes généralités les caractéristiques physiques, à l'état humide et à l'état sec dudit papier, mais encore
- d'augmenter significativement l'épaisseur dudit papier, et
- d'améliorer, lors des opérations de calandrage, la résistance dudit papier ou phénomène dit de « peluchage ».

Ceci, sans diminuer, voire en améliorant la marche machine et la productivité globale du système.

Les compositions cationiques conformes à l'invention peuvent également être utilisées avantageusement dans la fabrication de papier ou de carton, surfacé ou couché, et notamment :
- en association avec certains pigments, en particulier de nature anionique, mis en oeuvre dans les applications « impression jet d'encre »,
- de manière plus générale, comme additifs de sauces de surfaçage ou couchage en vue d'améliorer l'imprimabilité du papier,
- en substitution de polymères cationiques d'origine non amylacée (polydadmac, polychlorure d'aluminium,...) mis en oeuvre dans des sauces de couchage ou dans des colles de surfaçage, notamment appliquées sur des dispositifs de type « size-press » ou « film-press ».

La Société Demanderesse a par ailleurs constaté qu'une composition conforme à l'invention telle que la COMPOSITION A sus-décrite pouvait avantageusement être utilisée dans la fabrication d'un papier pour ondulé, en l'occurrence d'un papier cannelure à base de vieux papiers présentant un grammage d'environ 140 g/m².

La COMPOSITION A, mise en oeuvre en lieu et place d'un polyacrylamide cationique au sein d'un système de rétention particulier, a permis non seulement d'améliorer significativement ladite rétention mais également les caractéristiques physiques (en particulier l'indice CMT et l'indice MÜLLEN) du papier cannelure résultant.

La même COMPOSITION A s'est révélée par ailleurs comme particulièrement utile en tant qu'additif destiné à réduire les substances gênantes contenues dans les circuits d'eau papetiers. La COMPOSITION A, utilisée à raison de 0,1 % (sec/sec par rapport au poids de matière fibreuse) a permis notamment d'améliorer l'efficacité d'un amidon cationique utilisé classiquement comme additif de papeterie de masse et dont l'efficacité était diminuée du fait de l'existence de nombreuses substances anioniques indésirables au sein de la composition fibreuse composée majoritairement d'une pâte de type « chimico-thermomécanique ».

Ladite COMPOSITION A a permis tout en diminuant significativement, i.e. d'environ 14 %, le taux d'introduction de l'additif classique de papeterie de masse, d'augmenter significativement, i.e. d'au moins 5 à 10 %, tant la rétention totale (y compris donc celle de l'additif classique de masse) que la rétention des seules charges ou la rétention des seules fibres.

## Revendications

1. Composition amylacée cationique liquide, **caractérisée en ce qu'**elle présente :
- une matière sèche au moins égale à 10 %, de préférence comprise entre 10 et 50 %,
- une viscosité Brookfield, déterminée selon un test T à 25 °C, 20 tours par minute et 10 % de matière sèche, au moins égale à 275 mPa.s et au plus égale à 1000 mPa.s,
- un taux d'azote total au moins égal à 0,6 % et au plus égal à 1,4 %, ces pourcentages étant exprimés en poids sec par rapport au poids sec de composition,
- un pH inférieur à 9, de préférence compris entre 3,5 et 8,5.

2. Composition amylacée cationique liquide selon la revendication 1, **caractérisée en ce qu'**elle présente une viscosité, déterminée selon le test T, au moins égale à 275 mPa.s et au plus égale à 950 mPa.s.

3. Composition amylacée cationique liquide selon la revendication 2, **caractérisée en ce qu'**elle présente une viscosité, déterminée selon le test T, au moins égale à 275 mPa.s et au plus égale à 930 mPas de préférence comprise entre à 300 mPa.s et à 900 mPa.s.

4. Composition amylacée cationique liquide selon l'une quelconque des revendications 1 à 3, **caractérisée en ce qu'**elle présente un taux d'azote total au moins égal à 0,7 % et au plus égal à 1,3 %.

5. Composition amylacée cationique liquide selon l'une quelconque des revendications 1 à 4, **caractérisée en ce qu'**elle présente un pH compris entre 3,5 et 7,5, notamment compris entre 4 et 7.

6. Composition amylacée cationique liquide selon l'une quelconque des revendications 1 à 5, **caractérisée en ce qu'**elle contient au moins un polyol, de préférence au moins un polyol de nature saccharidique.

7. Composition amylacée cationique liquide selon l'une quelconque des revendications 1 à 6, **caractérisée en ce qu'**elle présente une température inférieure à 60°C, de préférence au plus égale à 50°C et notamment comprise entre 10 et 40°C.

8. Utilisation d'une composition amylacée cationique selon l'une quelconque des revendications 1 à 7 comme additif choisi dans le groupe comprenant les additifs pour papeterie ou cartonnerie et les additifs de traitement des eaux industrielles, issues ou non de papeterie ou cartonnerie, ou pour la préparation d'un tel additif.

9. Utilisation selon la revendication 8, **caractérisée en ce que** l'additif est choisi dans le groupe comprenant les additifs de papeterie de masse, les additifs destinés à réduire les substances gênantes contenues dans les circuits d'eau et/ou retenues sur les équipements de procédés, papetiers ou non, les additifs destinés à la préparation de compositions d'agents de collage utilisées pour le traitement interne ou externe du papier ou du carton, les additifs destinés à la préparation de compositions de crêpage, de surfaçage ou de couchage du papier ou du carton, les additifs destinés à la préparation de compositions contenant des azurants optiques, des charges, des pigments, des sels d'aluminium, de la silice colloïdale, des colorants et/ou des polymères synthétiques.

10. Utilisation selon la revendication 9, **caractérisée en ce que** l'additif est destiné à la préparation d'une composition d'agent de collage contenant un produit choisi dans le groupe comprenant les acides alkényl succiniques et dérivés, en particulier leurs sels et anhydrides, les alkylcétène dimères et dérivés, la colophane et dérivés, les acétals d'aldéhyde alkylés, les isocyanates alkylés, les (co)polymères synthétiques et les mélanges quelconques d'au moins deux quelconques desdits produits.

11. Utilisation selon la revendication 10, **caractérisée en ce que** l'additif est destiné à la préparation d'une composition d'agent de collage contenant un anhydride d'acide alkényl succinique (ASA).

12. Utilisation selon l'une quelconque des revendications 8 à 11, **caractérisée en ce que** l'on dilue préalablement la composition amylacée cationique liquide de telle sorte que sa matière sèche soit abaissée à une valeur comprise entre 0,5 et 9 %, de préférence comprise entre 1 et 7 %.

13. Utilisation selon l'une quelconque des revendications 8 à 12, **caractérisée en ce que** la composition amylacée cationique, éventuellement diluée, est mise en contact ou est destinée à être mise en contact avec une composition fibreuse présentant une teneur en ions calcium au moins égale à 200 mg/l, notamment comprise entre 250 et 1000 mg/l.

14. Utilisation selon la revendication 9, **caractérisée en ce que** l'additif est destiné à la fabrication de papier « tissue ».

15. Utilisation selon la revendication 9, **caractérisée en ce que** l'additif est destiné à la fabrication de papier surfacé ou couché.

16. Utilisation selon la revendication 9, **caractérisée en ce que** l'additif est destiné à la fabrication de papier pour ondulé.

17. Utilisation selon la revendication 9, **caractérisée en ce que** l'additif est un additif destiné à réduire les substances gênantes contenues dans les circuits d'eau papetiers.

## Claims

1. A cationic liquid starchy composition, **characterized in that** it exhibits:
- a dry matter at least equal to 10%, preferably of between 10 and 50%,
- a Brookfield viscosity, determined according to a T test at 25 °C, 20 rpm and 10 % dry matter, of at least 275 mPa.s and at most 1000 mPa.s,
- a total nitrogen level at least equal to 0.6% and at most equal to 1.4%, these percentages being expressed by dry weight with respect to the dry weight of the composition,
- a pH of less than 9, preferably of between 3.5 and 8.5.

2. The cationic liquid starchy composition as claimed in claim 1, **characterized in that** it exhibits a viscosity, determined according to the T test, at least equal to 275 mPa.s and at most equal to 950 mPa.s

3. The cationic liquid starchy composition as claimed in claim 2, **characterized in that** it exhibits a viscosity, determined according to the T test, at least equal to 275 mPa.s and at most equal to 930 mPa.s, preferably comprised between 300 mPa.s and 900 mPa.s.

4. The cationic liquid starchy composition as claimed in any one of claims 1 to 3, **characterized in that** it exhibits a total nitrogen level at least equal to 0.7% and at most equal to 1.3%.

5. The cationic liquid starchy composition as claimed in any one of claims 1 to 4, **characterized in that** it exhibits a pH of between 3.5 and 7.5, in particular of between 4 and 7.

6. The cationic liquid starchy composition as claimed in any one of claims 1 to 5, **characterized in that** it comprises at least one polyol, preferably at least one polyol of saccharide nature.

7. The cationic liquid starchy composition as claimed in any one of claims 1 to 6, **characterized in that** it exhibits a temperature of less than 60°C, preferably at most equal to 50°C and in particular of between 10 and 40°C.

8. The use of a cationic starchy composition as claimed in any one of claims 1 to 7 as additive chosen from the group consisting of additives for paper manufacture or board manufacture and additives for the treatment of process water, which may or may not result from paper manufacture or board manufacture, or for the preparation of such an additive.

9. The use as claimed in claim 8, **characterized in that** the additive is chosen from the group consisting of wet-end additives, additives intended to reduce troublesome substances present in water circuits and/or retained on equipment for processes related or not related to paper manufacture, additives intended for the preparation of sizing agent compositions used for the internal or external treatment of paper or board, additives intended for the preparation of compositions for the creping, surface treatment or coating of paper or board, or additives intended for the preparation of compositions comprising optical brightening agents, fillers, pigments, aluminum salts, colloidal silica, dyes and/or synthetic polymers.

10. The use according to claim 9, **characterized in that** the additive is intended for the preparation of a sizing agent composition comprising a product chosen from the group consisting of alkenylsuccinic acids and derivatives, in particular their salts and anhydrides, alkylketene dimers and derivatives, rosin and derivatives, aldehyde alkyl acetals, alkyl isocyanates, synthetic (co)polymers and any mixture of at least any two of said products.

11. The use as claimed in claim 10, **characterized in that** the additive is intended for the preparation of a sizing agent composition comprising an alkenylsuccinic anhydride (ASA).

12. The use as claimed in any one of claims 8 to 11, **characterized in that** the cationic liquid starchy composition is diluted beforehand so that its dry matter is lowered to a value of between 0.5 and 9%, preferably of between 1 and 7%.

13. The use as claimed in any one of claims 8 to 12, **characterized in that** the cationic starchy composition, optionally diluted, is brought into contact or is intended to be brought into contact with a fibrous composition exhibiting a content of calcium ions at least equal to 200 mg/l, in particular of between 250 and 1000 mg/l.

14. The use as claimed in claim 9, **characterized in that** the additive is intended for the manufacture of tissue paper.

15. The use as claimed in claim 9, **characterized in that** the additive is intended for the manufacture of surface-treated or coated paper.

16. The use as claimed in claim 9, **characterized in that** the additive is intended for the manufacture of corrugating paper.

17. The use as claimed in claim 9, **characterized in that** the additive is an additive intended to reduce troublesome substances present in paper manufacturing water circuits.

## Patentansprüche

1. Kationische stärkehaltige flüssige Zusammensetzung, **dadurch gekennzeichnet, dass** sie aufweist:
- eine Trockensubstanz von mindestens 10 %, vorzugsweise von zwischen 10 und 50 %,
- eine mit einem T-Test bei 25 °C, 20 Umdrehungen pro Minute und 10 % Trockensubstanz gemessene Brookfield-Viskosität von mindestens gleich 275 mPa·s und höchstens gleich 1000 mPa·s,
- einen Gesamt-Stickstoff-Gehalt von mindestens 0,6 % und höchstens 1,4 %, wobei diese Prozentanteile Trockengewichtangaben bezogen auf die Trockengewichte der Zusammensetzung sind,
- einen pH-Wert unter 9, vorzugsweise zwischen 3,5 und 8,5.

2. Kationische stärkehaltige flüssige Zusammensetzung nach Anspruch 1, **dadurch gekennzeichnet, dass** sie eine mit dem T-Test gemessene Viskosität von mindestens gleich 275 mPa·s und von höchstens gleich 950 mPa·s aufweist.

3. Kationische stärkehaltige flüssige Zusammensetzung nach Anspruch 2, **dadurch gekennzeichnet, dass** sie eine mit dem T-Test gemessene Viskosität von mindestens gleich 275 mPa·s und höchstens gleich 930 mPa·s, vorzugsweise eine solche Viskosität die zwischen 300mPa·s und 900 mPa·s liegt, aufweist.

4. Kationische stärkehaltige flüssige Zusammensetzung nach einem der Ansprüche 1 bis 3, **dadurch gekennzeichnet**, sie einen Gesamt-Stickstoff-Gehalt von mindestens 0,7 % und höchstens gleich 1,3 % aufweist.

5. Kationische stärkehaltige flüssige Zusammensetzung nach einem der Ansprüche 1 bis 4, **dadurch gekennzeichnet, dass** sie einen pH-Wert zwischen 3,5 und 7,5, insbesondere zwischen 4 und 7 aufweist.

6. Kationische stärkehaltige flüssige Zusammensetzung nach einem der Ansprüche 1 bis 5, **dadurch gekennzeichnet, dass** sie mindestens ein Polyol enthält, vorzugsweise mindestens ein saccharidpolyol.

7. Kationische stärkehaltige flüssige Zusammensetzung nach einem der Ansprüche 1 bis 6, **dadurch gekennzeichnet, dass** sie eine Temperatur von unter 60 °C, vorzugsweise von höchstens 50 °C und insbesondere eine Temperatur von zwischen 10 und 40 °C aufweist.

8. Verwendung einer kationischen stärkehaltigen flüssigen Zusammensetzung nach einem der Ansprüche 1 bis 7 als Additiv, ausgewählt aus der Gruppe, umfassend Additive für Papier- oder Pappeherstellung und Additive für die industrielle Aufbereitung von Abwasser aus der Papier- oder Pappeherstellung oder auch nicht, oder zur Herstellung eines solchen Additivs.

9. Verwendung nach Anspruch 8, **dadurch gekennzeichnet, dass** das Additiv ausgewählt ist aus der Gruppe, umfassend Additive für die Massepapierherstellung, Additive, die vorgesehen sind zum Verringern der störenden Substanzen, die in den Wasserkreisläufen enthalten sind und/oder auf den Verfahrensausstattungen zurückgehalten werden, ob im Bereich der Papierherstellung oder nicht, Additive, die vorgesehen sind für die Herstellung von Bindemittelzusammensetzungen, die verwendet werden für interne oder externe Behandlung von Papier oder Karton, Additive, die vorgesehen sind für die Herstellung von Kreppzusammensetzungen, Zusammensetzungen zur Oberflächenbehandlung oder zur Beschichtung von Papier oder Pappe, Additive für die Herstellung von Zusammensetzungen, die optische Aufheller, Füllstoffe, Pigmente, Aluminiumsalze, kolloidale Kieselsäure, Farbstoffe und / oder synthetische Polymere enthalten.

10. Verwendung nach Anspruch 9, **dadurch gekennzeichnet, dass** das Additiv vorgesehen ist zur Herstellung einer Klebemittelzusammensetzung, enthaltend ein Produkt, ausgewählt aus der Gruppe umfassend Alkenylensuccinsäuren und deren Derivate, insbesondere deren Salzen und Anhydriden; Alkylketendimere und deren Derivaten, Kolophonium und Derivate davon, Alkylaldehydacetalen, Alkylisocyanaten, synthetische (Co)polymeren und Mischungen aus mindestens zwei dieser Produkte.

11. Verwendung nach Anspruch 10, **dadurch gekennzeichnet, dass** das Additiv vorgesehen ist zur Herstellung einer Bindemittelzusammensetzung, umfassend ein Alkenylensuccinsäureanhydrid (ASA).

12. Verwendung nach einem der Ansprüche 8 bis 11, **dadurch gekennzeichnet, dass** man die flüssige kationische stärkehaltige Zusammensetzung zuvor verdünnt, so dass ihre Trockensubstanz auf einen Wert zwischen 0,5 und 9%, vorzugsweise zwischen 1 und 7% reduziert wird.

13. Verwendung nach einem der Ansprüche 8-12, **dadurch gekennzeichnet, dass** die gegebenenfalls verdünnte stärkehaltige kationische Zusammensetzung in Kontakt gebracht wird oder dafür vorgesehen ist in Kontakt gebracht zu werden mit einer faserförmigen Zusammensetzung, die einen Gehalt von Calciumionen von mindestens gleich 200 mg/l, insbesondere zwischen 250 und 1000 mg/l aufweist.

14. Verwendung nach Anspruch 9, **dadurch gekennzeichnet, dass** das Additiv vorgesehen ist zur Herstellung eines Tissue-Papier.

15. Verwendung nach Anspruch 9, **dadurch gekennzeichnet, dass** das Additiv vorgesehen ist zur Herstellung von Papier mit überzogener oder beschichteter Oberfläche.

16. Verwendung nach Anspruch 9, **dadurch gekennzeichnet, dass** das Additiv vorgesehen ist zur Herstellung von Wellpapier.

17. Verwendung nach Anspruch 9, **dadurch gekennzeichnet, dass** das Additiv vorgesehen ist zum Reduzieren der Störstoffe, die in Wasserkreisläufen der Papierindustrie enthalten sind.
